# EUROPEAN PATENT SPECIFICATION

(11) **EP 0 653 908 B1**
(45) Date of publication and mention of the grant of the patent: **27.12.1996**
(21) Application number: 93918094.9
(22) Date of filing: 04.08.1993
(51) Int. Cl.: A01C 15/00

(54) **SPREAD PATH MODIFIER FOR AGRICULTURAL SPREADER**
LEITVORRICHTUNG FÜR SCHLEUDERSTREUER
SYSTEME DE MODIFICATION DES TRAJECTOIRES D'EPANDAGE POUR EPANDEUR AGRICOLE

(30) Priority: 04.08.1992 NZ 24383792
(43) Date of publication of application: 24.05.1995
(73) Proprietor: HOYLE, David, Stanley, Maungaturoto 1240 (NZ)
(72) Inventor: HOYLE, David, Stanley, Maungaturoto 1240 (NZ)
(74) Representative: Gates, Marie Christina Esther
(86) International application number: NZ9300061
(87) International publication number: WO9403041

(56) References cited:
- EP-A- 0 269 501
- EP-A- 0 532 055
- DE-A- 3 341 703
- FR-A- 1 400 911
- FR-A- 2 637 448

## Description

### Technical Field

This invention concerns spread path modifiers for agricultural spreaders of the spinner type.

### Background Art

Spreaders may be loaded with a variety of materials of different density, grain size and water content. Most commercial spreader material contains fines mixed with the lumps, pellets, granules or powder constituting the main weight of the material to be spread.

Fines cannot be thrown as far by the spinners as the heavier material and these tend to be deposited in a band across the rear of the spreader from wheel to wheel while the heavier material lands toward the maximum range of the spinner.

Thus the fines present a problem. If the material is granulated by dampening with water, when thrown from the spinners it may shatter into fines against the spreader vehicle and undergo minimal spreading. Even if a guard is provided around the rear of the vehicle, fines tend to stick to the guard and build-up may occur.

Refinements in vehicle guidance and the metering of material have advanced to the stage where the performance of the spinners now lags and a patchy spread pattern is not acceptable. The spread path lies in a band to the left and right of the spinners up to 20 metres wide depending on the mass of the particles and spinner rpm. The contractor aims for minimum band overlap. The material leaves the spinners from all four quadrants and inevitably the material leaving the inner rear quadrant spreads to the rear. Material leaving the outer front quadrant strikes the vehicle's extremity. FRA 2 637 448 which discloses the features of the preamble of claim 1, describes a spreader with twin spinners. Each spinner has a 180 degree guard which protects the adjacent spinner. Around part of the circumference of each spinner there is a stationary multiple vane assembly which directs spreader material to the same side of the vehicle.

The object of this invention is to deal with the material which strikes the spreader in the course of spreading.

### Summary of the Invention

This invention provides a deflector assembly for an agricultural spreader of the type described characterised by a deflector capable when mounted transversely of the direction of travel of the spreader, of deflecting spreader material thrown by a spinner in the direction of the spinner body wherein one or more guides project uprightly into and substantially parallel into the path of the material leaving the spinner thereby modifying the path of the material.A main cover may overlie the spinners. The assembly will work without a cover but not as effectively. The front deflector 100-150mm deep may depend from the main cover in order to act in the quadrant adjacent the material inlet. This front deflector may be non-adjustable and located just beyond the sweep of the spinner in order to maintain air speed, entraining material in the moving air. The rear deflector which acts in the inner rear quadrant may be adjustable and of the same depth in order to vary the spread path. If the contractor wishes to spread in an orchard the rear deflectors are both adjusted to release material at the rear thereby reducing band width.

The side deflectors may be mounted on an extension of the main cover. The extension may be separable from the main deflector in order to be replaceable, repairable or an accessory.

The extension may lie at an angle of 5-15 degrees to the cover. The extension may be trapezoidal or mitre shaped and slightly curved but more usually will be flat. The extension is conveniently a metal sheet or plate.

The side deflectors may be disposed with substantially equal spacing across the face of the extension. The side deflectors may be arcuate. The side deflectors may be curved convexly with respect to the ground in order to modify the airstream moving past the side deflectors. The aim is to modify the trajectory of the thrown material just sufficiently to miss the spreader and in doing so exert a self cleaning action on the deflector surfaces and keep the rear of the spreader free of adhered material. Accordingly the side deflectors are situated so that the air stream meets the leading part of the deflector at an acute angle, 10 degrees or preferably less. The less the material is diverted the greater the retained momentum. Small tuning adjustments are possible by noting the polish pattern which appears on the deflectors after use.

The side deflectors may have equal radius of curvature and may be spaced equally across the plate. Alternatively the side deflectors may be of equal radius of curvature and disposed in a mutually converging array so as to accelerate the airstream passing between them.

Instead one or more side deflectors may have a curve of changing radius. The side deflectors may be trapezoidal in plan.

The extension plate may be slotted along the path of each guide. The side deflectors may have lugs which project through the slots enabling a clean joint at ninety degrees. Welds on the rear face of the extension plate hold the side deflectors in place without affording any site where build-up may start. The front and rear deflectors, side deflectors and extension may be made from sheet metal blanks. The main cover may be made from mild steel. The extension plates and side deflectors may be made from stainless alloys for example stainless steels.

One embodiment is now described with reference to the accompanying drawings.

### Brief description of the drawings

Fig 1 is a plan of the deflector assembly for a pair of spinners;
Fig 2 is a plan of a side deflector;
Fig 3 is a rear view of half of the assembly serving the RH spinner;

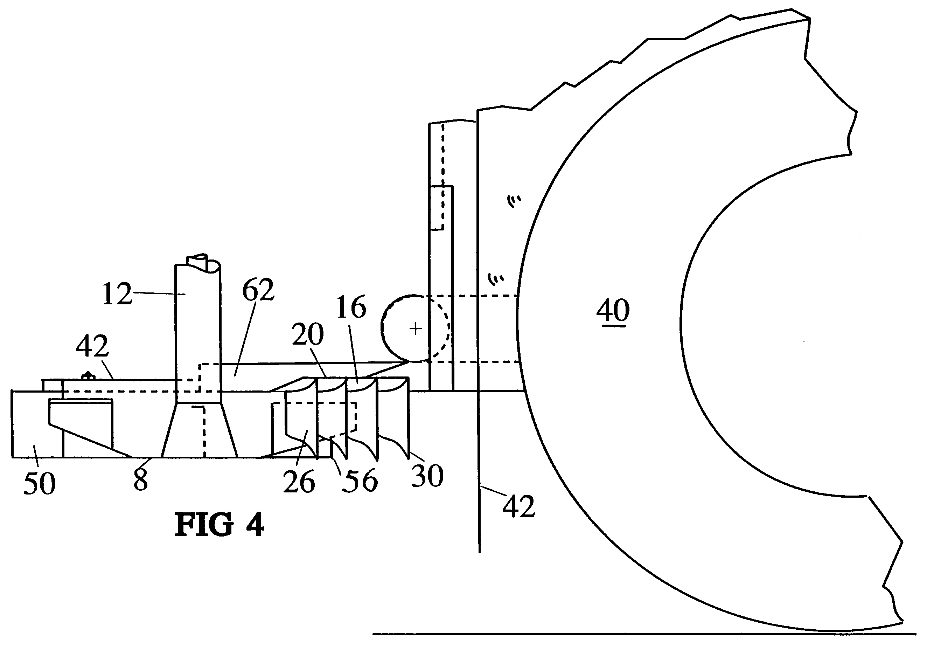

Fig 4 is a side view of one of the spinners and the side deflectors on the adjacent extension plate.

### Best mode of carrying out the invention

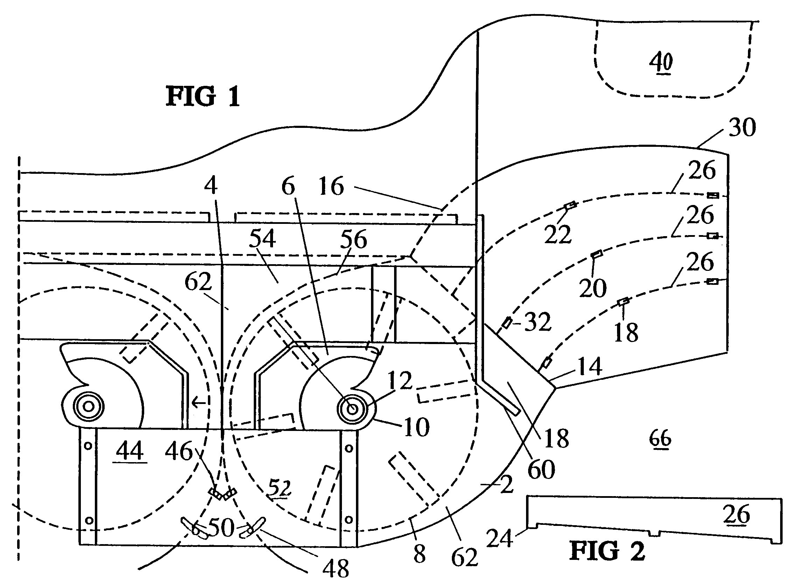

Referring now to Figs 1 and 2, the main cover 2 is cut from a single sheet of mild steel. The centre axis 4 divides the main cover symmetrically ; only the RH half is described. A port 6 allows entry of spreader material to the spinner 8 (see Fig 2) and cutout 10 allows the cover to overlie the spinner 8 and lie close to the spinner shaft 12. The straight edge 14 of the main cover is drilled to receive a bolt on stainless steel trapezoidal extension plate 16. The extension lies at ten degrees raised inclination to the edge of the main cover. The plate is pierced by an upper trio of slots 18, a lower trio of slots 20 and a middle trio of slots 22.

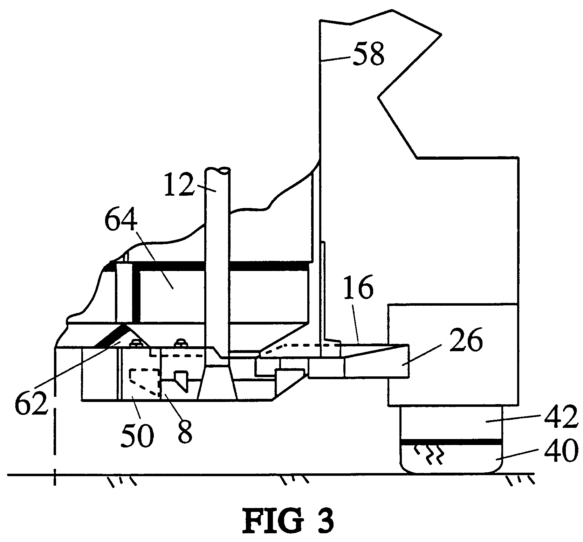

Each trio of slots receives the lugs 24 of a stainless steel side deflector plate 26 which is curved to conform to the slots. The lugs are welded to the upper face 28 of the extension plate (best seen in Fig 3) and project vertically into and approximately parallel to the centrifugal path of the moving material. A fourth side deflector 30 has no lugs but is butt welded to the edge of the extension plate.

The side deflectors are trapezoidal in shape being 110mm wide at the spinner end and 200mm wide at the opposite end. The spinner ends 32 of the two rearmost side deflectors 26 mutually diverge slightly. The dispositions of the side deflectors may be seen clearly in Figs 1 and 3.

The wheel 40 and mud flaps 42 stand clear of the side deflectors which direct the material at about 90 degrees to the direction of spreader travel. The cover 2 has a raised section 42 with curved slots 46,48 which allow the positions of curved rear deflector 50 to be selected. The rear deflector 50 controls the discharge of material from the inner rear quadrant 52.

Similarly discharge of material from the inner front quadrant 54 is prevented by a curved, non-adjustable front deflector 56 which depends vertically from the main cover 2. The front deflector lies close to the sweep of the spinners in order to deflect the material back into the airstream. The entire spreader assembly is suspended from the spreader container 58 by brackets 60.

A sheet metal apron 62 provides ramp faces around the conveyor 64 to direct material to the port 6.

In use the RH spinner rotates anti-clockwise. The material reaches the spinner in the front inner quadrant. The spinner accelerates the material. Some strikes the rear deflector and much leaves in the rear outer quadrant 62, the remainder being accelerated further by the spinner toward the front outer quadrant 64 where it meets the side deflectors at very acute angles, 4,5,6,7,8,9 degrees. This allows the material to be thrown a useful distance while ensuring it misses the spreader. Most of the material has discharged by the time the front inner quadrant is reached so the front deflector does not work as hard as the rear deflector. At this point a fresh load of material is added to the system.

The deflectors allow an arc of spread 66 of 30-40 degrees.

## Claims

1. A deflector assembly for an agricultural spreader of the type having a pair of side by side spinners (8) which in use are top fed from a bulk material container (58) and wherein each spinner has a spread zone comprising a front inner quadrant (54); a front outer quadrant (64); a rear inner quadrant (52); a rear outer quadrant (62);
characterised by
a front deflector (56) adjacent the inner front quadrant of the spinner, a rear deflector (50) adjacent the inner rear quadrant of each spinner, a cover mounted at or near the circumference of each spinner just above the same, and a side by side series of side deflectors (26,30) extending from each cover into the path of the material leaving the spinner in the front outer quadrant in order to deflect the material from the spreader vehicle (40) into the spread path (66).

2. A deflector assembly as claimed in claim 1
characterised by
a main cover (2) overlying the spinners and having a charging port (6) for each spinner in the inner front quadrant (54)

3. A deflector assembly as claimed in claim 2
characterised by
the cover (16) which mounts the side deflectors (26,30) in the outer front quadrant is a separable extension of the main cover (2)

4. A deflector assembly as claimed in claim 2 or 3
characterised in that
the direction of the side deflectors (26,30) lie at an acute angle to the path of the material leaving the spinner (8) in the outer front quadrant.

5. A deflector as claimed in any one of claims 1-4
characterised in that
the side deflectors (26,30) are of shallow arcuate disposition.

6. A deflector assembly as claimed in claim 5
characterised in that
two or more of the arcuate deflectors (26,30) mutually converge in order to accelerate part of the airstream.

7. A deflector assembly as claimed in any one of claims 1-6 characterised in that
the the side deflectors (26,30) are a series of strips lying at ninety degrees to the cover (16)

8. A deflector assembly as claimed in any one of claims 1-7 characterised in that
the side deflectors (26,30) project further at the outer end of the strip than at the inner end of the strip.

9. A deflector assembly as claimed in any one of claims 1-8 characterised in that
the cover (16) is inclined upwardly at 5-15 degrees to the plane of the spinner.

10. A deflector assembly as claimed in any one of claims 1-9 characterised in that
the side deflectors (26,30) are joined to the cover (16) without any obstruction which could build up fines.

11. A deflector assembly as claimed in any one of claims 1-9 characterised in that
the front deflector (56) which acts at the spinner's inner front quadrant (54) lies close to the circumference of the spinner.

12. A deflector assembly as claimed in any one of claims 1-11 characterised in that
the rear deflector (50) which acts at the inner rear quadrant is adjustable toward and away from the spinner (8) in order to change the spread path width.

13. A deflector assembly as claimed in any one of claims 1-11 in combination with an agricultural spreader of the type having side by side spinners.

## Patentansprüche

1. Ablenkvorrichtung für eine landwirtschaftliche Streumaschine von der Art mit einem Paar nebeneinander angeordneter Schleuderscheiben (8), denen im Betrieb Material von oben aus einem Schüttgutcontainer (58) zugeführt wird, und wobei jede Schleuderscheibe eine Streuzone aufweist, die einen vorderen inneren Quadranten (54), einen vorderen äußeren Quadranten (64), einen hinteren inneren Quadranten (52) und einen hinteren äußeren Quadranten (62) aufweist,
gekennzeichnet durch
einen vorderen Deflektor (56), der an den vorderen inneren Quadranten der Schleuderscheibe angrenzt, einen hinteren Deflektor (50), der an den hinteren inneren Quadranten jeder Schleuderscheibe angrenzt, eine Abdeckung, die am oder nahe dem Umfang jeder Schleuderscheibe gerade oberhalb derselben angebracht ist, und eine Reihe von nebeneinander angeordneten Seitendeflektoren (26, 30), die sich von jeder Abdeckung in den Weg des die Schleuderscheibe verlassenden Materials in dem vorderen äußeren Quadranten erstrecken, um das Material von dem Streufahrzeug (40) in den Streuweg (66) abzulenken.

2. Ablenkvorrichtung nach Anspruch 1, gekennzeichnet durch eine Hauptabdeckung (2), die über den Schleuderscheiben liegt und eine Beschickungsöffnung (6) für jede Schleuderscheibe in dem vorderen inneren Quadranten (54) aufweist.

3. Ablenkvorrichtung nach Anspruch 2, dadurch gekennzeichnet, daß die Abdeckung (16), die die Seitendeflektoren (26, 30) in dem äußeren vorderen Quadranten aufnimmt, eine abtrennbare Verlängerung der Hauptabdeckung (2) ist.

4. Ablenkvorrichtung nach Anspruch 2 oder 3, dadurch gekennzeichnet, daß die Seitendeflektoren (26, 30) in einem spitzen Winkel zum Weg des Materials, das die Schleuderscheibe in dem äußeren vorderen Quadranten verläßt, ausgerichtet sind.

5. Ablenkvorrichtung nach einem der Ansprüche 1 bis 4, dadurch gekennzeichnet, daß die Seitendeflektoren (26, 30) eine flache, bogenförmige Anordnung aufweisen.

6. Ablenkvorrichtung nach Anspruch 5, dadurch gekennzeichnet, daß zwei oder mehrere der bogenförmigen Deflektoren (26, 30) sich gegenseitig nähern, um einen Teil des Luftstromes zu beschleunigen.

7. Ablenkvorrichtung nach einem der Ansprüche 1 bis 6, dadurch gekennzeichnet, daß die Seitendeflektoren (26, 30) eine Reihe von streifenförmigen Stücken sind, die zu der Abdeckung (16) in einem Winkel von 90 Grad liegen.

8. Ablenkvorrichtung nach einem der Ansprüche 1 bis 7, dadurch gekennzeichnet, daß die Seitendeflektoren (26, 30) an dem Außenende des streifenförmigen Stückes weiter hervorstehen als an dem Innenende des streifenförmigen Stückes.

9. Ablenkvorrichtung nach einem der Ansprüche 1 bis 8, dadurch gekennzeichnet, daß die Abdeckung (16) um einen Winkel von 5 bis 15 Grad gegenüber der Ebene der Schleuderscheibe aufwärts geneigt ist.

10. Ablenkvorrichtung nach einem der Ansprüche 1 bis 9, dadurch gekennzeichnet, daß die Seitendeflektoren (26, 30) mit der Abdeckung (16) ohne Bildung eines Hindernisses, an dem sich Material ablagern könnte, verbunden sind.

11. Ablenkvorrichtung nach einem der Ansprüche 1 bis 9, dadurch gekennzeichnet, daß der vordere Deflektor (56), der an dem inneren vorderen Quadranten (54) der Schleuderscheibe wirkt, nahe am Umfang der Schleuderscheibe liegt.

12. Ablenkvorrichtung nach einem der Ansprüche 1 bis 11, dadurch gekennzeichnet, daß der hintere Deflektor (50), der an dem inneren hinteren Quadranten wirkt, gegen die Schleuderscheibe (8) hin und von ihr weg einstellbar ist, um die Breite des Streuweges ändern zu können.

13. Ablenkvorrichtung nach einem der Ansprüche 1 bis 11 in Kombination mit einer landwirtschaftlichen Schleudermaschine der Art, die nebeneinander angeordnete Schleuderscheiben aufweist.

## Revendications

1. Dispositif déflecteur pour un épandeur agricole du type comprenant deux distributeurs rotatifs (8) côte à côte qui sont alimentés par le dessus, en utilisation, à partir d'un récipient de matière en vrac (58), et dans lequel chaque distributeur rotatif a une zone d'épandage comprenant un quadrant intérieur avant (54), un quadrant extérieur avant (64), un quadrant intérieur arrière (52) et un quadrant extérieur arrière (62) ;
caractérisé en ce qu'il comprend :
un déflecteur avant (56) adjacent au quadrant intérieur avant du distributeur rotatif, un déflecteur arrière (50) adjacent au quadrant intérieur arrière de chaque distributeur rotatif, un couvercle monté à l'endroit ou à proximité de la circonférence de chaque distributeur rotatif, juste au-dessus de celui-ci, et une série de déflecteurs latéraux côte à côte (26, 30) s'étendant à partir de chaque couvercle et pénétrant dans le chemin de la matière qui quitte le distributeur rotatif dans le quadrant extérieur avant afin de dévier la matière en dehors du véhicule d'épandage (40),vers le chemin d'épandage (66).

2. Dispositif déflecteur suivant la revendication 1,
caractérisé par :
un couvercle principal (2) placé au-dessus des distributeurs rotatifs et ayant une tubulure de chargement (6) pour chaque distributeur rotatif dans le quadrant intérieur avant (54).

3. Dispositif déflecteur suivant la revendication 2,
caractérisé en ce que :
le couvercle (16) qui porte les déflecteurs latéraux (26, 30) dans le quadrant extérieur avant est une extension séparable du couvercle principal (2).

4. Dispositif déflecteur suivant la revendication 2 ou 3,
caractérisé en ce que :
la direction des déflecteurs latéraux (26, 30) définit un angle aigu avec le chemin de la matière quittant le distributeur rotatif (8) dans le quadrant extérieur avant.

5. Dispositif déflecteur suivant une quelconque des revendications 1 à 4,
caractérisé en ce que :
les déflecteurs latéraux (26, 30) ont une configuration courbe peu profonde.

6. Dispositif déflecteur suivant la revendication 5,
caractérisé en ce que :
deux des déflecteurs courbes (26, 30) ou plus convergent mutuellement afin d'accélérer une partie du flux d'air.

7. Dispositif déflecteur suivant une quelconque des revendications 1 à 6,
caractérisé en ce que :
les déflecteurs latéraux (26, 30) sont une série de bandes disposées à 90 degrés par rapport au couvercle (16).

8. Dispositif déflecteur suivant une quelconque des revendications 1 à 7,
caractérisé en ce que :
les déflecteurs latéraux (26, 30) se projettent plus loin à l'extrémité extérieure de la bande qu'à l'extrémité intérieure de la bande.

9. Dispositif déflecteur suivant une quelconque des revendications 1 à 8,
caractérisé en ce que :
le couvercle (16) est incliné vers le haut à 5-15 degrés par rapport au plan du distributeur rotatif.

10. Dispositif déflecteur suivant une quelconque des revendications 1 à 9,
caractérisé en ce que :
les déflecteurs latéraux (26, 30) sont raccordés au couvercle (16) sans aucune obstruction qui pourrait accumuler des fines.

11. Dispositif déflecteur suivant une quelconque des revendications 1 à 9,
caractérisé en ce que :
le déflecteur avant (56), qui intervient dans le quadrant intérieur avant (54) du distributeur rotatif, est proche de la circonférence du distributeur rotatif.

12. Dispositif déflecteur suivant une quelconque des revendications 1 à 11,
caractérisé en ce que :
le déflecteur arrière (50), qui intervient dans le quadrant intérieur arrière, est réglable de façon à se rapprocher et s'éloigner du distributeur rotatif (8) afin de modifier la largeur du chemin d'épandage.

13. Dispositif déflecteur suivant une quelconque des revendications 1 à 11, en combinaison avec un épandeur agricole du type ayant des distributeurs rotatifs côte à côte.
